# DEMANDE DE BREVET EUROPEEN

(11) **EP 1 562 365 A1**
(43) Date de publication de la demande: **10.08.2005**
(21) Numéro de dépôt: 05290255.8
(22) Date de dépôt: 04.02.2005
(51) Int. Cl.: H04N 1/405

(54) **Procédé et système d'établissement d'un tramage par zone d'une image adapté pour utiliser des variantes de chemin de diffusion d'erreur**

(30) Priorité: 06.02.2004 FR 0401132
(71) Demandeur: SAGEM S.A., 75512 Paris Cedex 15 (FR)
(72) Inventeur: Lemaistre, Nicolas, 77500 Chelles (FR); Monnerie, Nicolas, 21800 Quetigny (FR); Ostromoukhov, Victor, Outremont Quebec H2V3P3 (CA)
(74) Mandataire: Debay, Yves

(57) **Abrégé**

Le procédé de tramage par zone en mode diffusion d'erreur se caractérise par une première étape de mémorisation pour stocker des données d'entrée sous la forme de blocs de pixels (B) représentatifs d'une zone de l'image et une deuxième étape de mémorisation pour stocker des tables de décisions (3), associées chacune à des zones de l'image, incluant des données (30) représentatives de décisions de traitement fonction d'au moins un chemin de parcours déterminé de type non linéaire des pixels. Un traitement successif bloc par bloc de chacune des zones est réalisé par balayage horizontal, ledit chemin de parcours à l'intérieur d'une zone comprenant au moins quatre orientations distinctes, le cheminement de parcours d'un bloc étant pris en compte pour ajuster les reports d'erreur et modifier les directions et coefficients de report d'erreurs en fonction des orientations dudit chemin de parcours de façon à produire une image convenable.

## Description

### DOMAINE TECHNIQUE DE L'INVENTION

La présente invention s'applique au domaine de l'électronique et plus particulièrement à l'établissement de signaux représentatifs de trames d'une image pour permettre leur impression par un dispositif d'impression ou leur affichage par des moyens d'affichage (écrans LCD, CRT ou plasma). La présente invention concerne un procédé d'établissement d'un tramage par zone d'une image mis en oeuvre par un système adapté pour utiliser des variantes de chemin de diffusion d'erreur.

### ARRIERE-PLAN TECHNOLOGIQUE DE L'INVENTION

Une trame est un ensemble de lignes successives constituées de points successifs (ou pixels) dont les valeurs représentatives de l'arrangement bidimensionnel et des compositions chromatiques et/ou de luminance définissent une image. Le tramage correspond donc à l'attribution d'une couleur et/ou d'une luminance à chacun des pixels de la trame.

La trame d'image est généralement constituée dans l'art antérieur de lignes balayées de gauche à droite puis de droite à gauche pour les lignes inférieures suivantes et ensuite de gauche à droite et ainsi de suite, en réitérant ce type d'opération de manière analogue au balayage des moniteurs de télévision.

Classiquement, la diffusion d'erreur est utilisée pour le traitement des pixels pour atténuer le contraste entre les zones de couleur créées. La diffusion d'erreur permet en effet d'obtenir une très bonne qualité d'image pour la génération d'images tramées. Cependant, l'implémentation correspondante pour cette méthode présente un coût très élevé notamment à cause de la nécessité de stocker une ligne entière d'erreurs. Cette dernière doit être stockée dans une mémoire externe au circuit de traitement quand l'espace dédié en mémoire interne n'est pas suffisant. L'opération présente alors l'inconvénient de diminuer le débit de pixels traités ainsi que la bande passante.

Une approche de la diffusion d'erreur par traitement de blocs de pixels permettrait d'améliorer la bande passante en limitant les accès à la mémoire externe uniquement à la première ligne et à la dernière ligne d'un tel bloc. Toutefois, la qualité du tramage obtenu avec cette approche est souvent très médiocre lorsqu'on applique des chemins de diffusion classiques pour parcourir les pixels, comme dans le cas par exemple du balayage horizontal susmentionné.

Il est connu dans l'art antérieur, par le document « Memory Efficient Error Diffusion », Color Imaging VIII: Processing, Hardcopy, and Applications, Reiner Eschbach, Gabriel G. Marcu, Editors, Proceedings of SPIE-IS&T Electronic Imaging, SPIE Vol. 5008 (2003), de Jan P. Allebach et Ti-chiun Chang, l'utilisation d'un chemin pour lequel la qualité de tramage obtenue est bonne. Il apparaît donc que le tramage par diffusion d'erreur en zone est une technique qui peut être envisagée pour de futures applications. Toutefois, il est nécessaire de concevoir une architecture performante capable de s'adapter ou d'être programmée en fonction du chemin de diffusion.

### DESCRIPTION GENERALE DE L'INVENTION

La présente invention a pour but de pallier certains inconvénients de l'art antérieur en proposant un procédé d'établissement d'un tramage par zone d'une image, qui soit adapté pour différents chemins de diffusion d'erreur.

Ce but est atteint par un procédé d'établissement d'un tramage par zone en mode diffusion d'erreur de données d'image devant être affichées ou imprimées, dans lequel des données d'entrée représentatives de pixels d'une image numérique sont fournies en entrée d'un circuit de traitement en correspondance avec une image d'entrée courante, comportant une première étape de mémorisation pour stocker des données d'entrée, dans des moyens de stockage d'entrée, sous la forme de blocs de pixels représentatifs d'une zone de l'image, ledit procédé étant **caractérisé en ce qu**'il comprend :
- une deuxième étape de mémorisation pour stocker dans une mémoire spécifique de programmation des tables de décisions, associées chacune à des zones de l'image, incluant des données représentatives de décisions de traitement fonction d'au moins un chemin de parcours déterminé de type non linéaire des pixels correspondant à une zone de l'image, la deuxième étape de mémorisation comprenant une pluralité d'opérations de stockage, dans la mémoire spécifique de programmation, pour stocker chacune des tables de décisions sous la forme d'une succession de données représentatives de décisions de traitement pour un pixel courant, empilées suivant un ordre défini par ledit chemin de parcours déterminé des pixels du bloc,
- une étape de traitement successif bloc par bloc de chacune des zones par balayage horizontal, incluant pour chacun des blocs une étape d'extraction de données représentatives d'un pixel courant sur ledit chemin de parcours, une étape de lecture dans la table de décisions correspondante au bloc, utilisant un module de lecture pour lire des données notamment représentatives en premier lieu de commandes de diffusion d'erreur et d'orientation du chemin de parcours pour le pixel courant et en second lieu, d'indications d'adressage associées à ce pixel courant, ainsi qu'une étape de diffusion d'erreur fonction des données de la table de décisions pour soumettre à une diffusion d'erreur le pixel courant de la zone traitée afin de produire un pixel de sortie et des données de diffusion d'erreur, ledit chemin de parcours à l'intérieur d'une zone comprenant au moins quatre orientations distinctes, et
- une étape de prise en compte du cheminement de parcours d'un bloc pour ajuster les reports d'erreur et modifier les directions et coefficients de report d'erreurs en fonction des orientations dudit chemin de parcours de façon à produire une image convenable.

Ainsi, l'invention permet la construction d'une trame en utilisant avantageusement des blocs de pixels et en parcourant ces blocs de pixels selon des chemins qui peuvent être modifiés. Le cheminement de parcours du bloc est pris en compte pour corriger les reports d'erreurs et modifier les directions et coefficients de report d'erreurs de façon que, lorsque les blocs de pixels sont mis les uns à côté des autres pour constituer une trame, on obtienne un résultat convenable.

Selon une autre particularité de l'invention, ladite étape de traitement comprend en outre, pour chacun des blocs, une étape de répartition d'erreur permettant d'ajouter lesdites données de diffusion d'erreur, d'une part à des pixels adjacents audit pixel d'entrée à l'intérieur de la zone correspondante par une première unité de répartition d'erreur, et d'autre part à des pixels adjacents audit pixel d'entrée à l'extérieur de la zone correspondante par une deuxième unité de répartition d'erreur.

Selon une autre particularité, la première étape de mémorisation comprend une division en une pluralité de blocs de pixels des données d'entrée, réalisée par les moyens de stockage d'entrée, les blocs de pixels étant dimensionnés pour former des rangées de blocs de hauteur uniforme, ces rangées de blocs étant traitées selon un balayage horizontal de gauche à droite.

Selon une autre particularité, l'étape de lecture dans la table de décisions comprend une lecture linéaire des données correspondant au pixel courant.

Selon une autre particularité, l'étape de lecture dans la table de décisions est réitérée pour chacun des pixels parcourus successivement dans un bloc selon le chemin de parcours déterminé et comprend la lecture des coordonnées du pixel suivant à extraire du bloc, de commandes de moyens de multiplexage pour indiquer l'orientation du chemin de parcours ainsi que d'adresses d'écriture ou de lecture pour le stockage des erreurs.

Selon une autre particularité, l'étape d'extraction consiste à extraire depuis les moyens de stockage d'entrée un premier pixel prédéterminé d'un bloc de pixels, puis extraire au fur et à mesure les pixels suivants en fonction des commandes d'orientation du chemin de parcours lues à chaque pixel traité.

Selon une autre particularité, les orientations de diffusion sont programmées par un module d'adressage par incrémentation-désincrémentation des coordonnées du pixel courant en fonction des données de la table de décisions, des données d'adressage indiquant les coordonnées du premier pixel extrait d'un bloc étant fournies au module d'adressage pour initialiser la programmation des orientations de diffusion, le chemin de parcours déterminé comprenant de quatre à huit orientations distinctes.

Selon une autre particularité, l'étape de diffusion d'erreur fournit des données de diffusion d'erreur représentatives de coefficients d'erreur à diffuser définis en fonction de données de commande de la table de décisions, le pixel de sortie produit lors de l'étape de diffusion d'erreur étant envoyé par des moyens de sortie de pixel dans des moyens de stockage de sortie stockant les pixels de sortie pour affichage ou impression.

Selon une autre particularité, des conditions de multiplexage de l'erreur à reporter sur le pixel courant ainsi que des conditions de multiplexage de données représentatives d'une trace de mémoire de stockage du pixel courant sont définies au cours de la deuxième étape de mémorisation dans les commandes de moyens de multiplexage, des informations sur les conditions de multiplexage de l'erreur à reporter sur le pixel courant étant transmises à des premiers moyens de multiplexage pour diffuser l'erreur sur le pixel courant, tandis que des informations sur les conditions de multiplexage de données représentatives d'une trace de mémoire de stockage du pixel courant sont transmises à des seconds moyens de multiplexage formant lesdites première et deuxième unités de répartition d'erreur.

Selon une autre particularité, l'étape de diffusion d'erreur fournit des données de diffusion d'erreur produites par un module de calcul disposant d'au moins une première liaison de sortie vers les seconds moyens de multiplexage ainsi que d'une liaison supplémentaire vers une unité de stockage temporaire, formant tampon et stockant temporairement des données de diffusion d'erreur, les informations sur les conditions de multiplexage de la trace de mémoire de stockage du pixel courant étant utilisées par les seconds moyens de multiplexage de façon à envoyer les données de diffusion d'erreur produites par le module de calcul dans une mémoire interne s'il s'agit d'erreur à diffuser dans le même bloc ou sinon dans une mémoire externe au circuit de traitement.

Selon une autre particularité, la première étape de mémorisation comporte une division, réalisée par les moyens de stockage d'entrée, des données d'entrée en une pluralité de blocs de pixels de largeur uniforme dimensionnés pour former des colonnes de blocs, le balayage des blocs horizontal étant remplacé par un balayage vertical.

Selon une autre particularité, plusieurs chemins de parcours complémentaires, ayant des coordonnées de départ distinctes, sont utilisés pour couvrir une zone de l'image correspondant à un bloc de pixels, les données des tables de décisions comprenant pour chacun des pixels des données représentatives du départ ou de la continuité du chemin de parcours passant par ce pixel.

Selon une autre particularité, la première étape de mémorisation comprend le stockage d'une pluralité de composantes pour chacun des pixels d'un bloc de pixels, chaque composante étant traitée de manière indépendante lors du traitement des blocs de pixels.

Un autre but de l'invention est de proposer un système, utilisable sur un appareil de prise d'image ou sur un appareil de représentation d'image (par exemple une imprimante), palliant les inconvénients de l'art antérieur.

Ce but est atteint par un système d'établissement d'un tramage par zone d'une image, adapté pour utiliser des variantes de chemin de diffusion d'erreur, comportant un circuit de traitement, des moyens d'entrée d'image conçus pour fournir en entrée du circuit de traitement des données d'entrée devant être affichées ou imprimées représentatives de pixels d'une image numérique en correspondance avec une image d'entrée courante, **caractérisé en ce qu**'il comprend :
- des moyens de stockage d'entrée conçus pour diviser et stocker les données d'entrée en une pluralité de blocs de pixels représentatifs d'une zone de l'image;
- une mémoire spécifique de programmation permettant de stocker des tables de décisions, associées chacune à des zones de l'image, les tables de décisions incluant des données représentatives de décisions de traitement fonction d'au moins un chemin de parcours déterminé de type non linéaire des pixels correspondant à une zone de l'image, ledit chemin de parcours à l'intérieur d'une zone comprenant au moins quatre orientations distinctes ;
- une unité de sélection dans le circuit de traitement pour sélectionner et permettre le traitement successif bloc par bloc de chacune des zones selon un balayage de l'image horizontal ou vertical ;
- un module d'extraction pour extraire depuis lesdits moyens de stockage d'entrée des données représentatives d'un pixel courant sur ledit chemin de parcours ;
- un module de lecture dans le circuit de traitement conçu pour lire, dans la table de décisions correspondante au bloc, des données notamment représentatives en premier lieu de commandes de diffusion d'erreur et d'orientation du chemin de parcours pour le pixel courant et en second lieu, d'indications d'adressage associées à ce pixel courant ;
- des moyens de diffusion d'erreur conçus pour soumettre à une diffusion d'erreur le pixel courant de la zone traitée en fonction des données de la table de décisions, afin de produire un pixel de sortie et des données de diffusion d'erreur ;
- des moyens de répartition d'erreur pour ajouter lesdites données de diffusion d'erreur, d'une part à des pixels adjacents audit pixel d'entrée à l'intérieur de la zone correspondante par une première unité de répartition d'erreur, et d'autre part à des pixels adjacents audit pixel d'entrée à l'extérieur de la zone correspondante par une deuxième unité de répartition d'erreur.

Selon une autre particularité, la mémoire spécifique de programmation stocke chacune des tables de décisions sous la forme d'une succession de données représentatives de décisions de traitement pour un pixel courant, empilées suivant un ordre défini par le chemin de parcours déterminé des pixels du bloc, le module de lecture étant apte à lire de manière linéaire les données correspondant au pixel courant dans la table de décisions.

Selon une autre particularité, le module de lecture est conçu pour réitérer une lecture dans la table de décisions pour chacun des pixels parcourus successivement dans un bloc selon le chemin de parcours déterminé, les données lues comprenant des coordonnées du pixel suivant à extraire du bloc, des commandes de moyens de multiplexage pour indiquer l'orientation du chemin de parcours ainsi que des adresses d'écriture ou de lecture pour le stockage des erreurs.

Selon une autre particularité, le module d'extraction est apte à extraire depuis les moyens de stockage d'entrée un premier pixel prédéterminé d'un bloc de pixels, puis extraire au fur et à mesure les pixels suivants en fonction des commandes d'orientation du chemin de parcours lues pour chaque pixel traité par le module de lecture.

Selon une autre particularité, le circuit de traitement comprend un module d'adressage agencé pour programmer les orientations de diffusion par incrémentation-désincrémentation des coordonnées du pixel courant en fonction des données de la table de décisions, des données d'adressage permettant d'indiquer les coordonnées du premier pixel extrait d'un bloc étant fournies au module d'adressage pour initialiser la programmation des orientations de diffusion, le chemin de parcours déterminé comprenant de quatre à huit orientations distinctes.

Selon une autre particularité, les moyens de diffusion d'erreur sont conçus pour fournir des données de diffusion d'erreur représentatives de coefficients d'erreur à diffuser définis en fonction de données de commande de la table de décisions, les moyens de diffusion d'erreur étant reliés à des moyens de sortie de pixel pour que le pixel de sortie produit soit envoyé dans des moyens de stockage de sortie stockant les pixels de sortie pour affichage ou impression.

Selon une autre particularité, les moyens de diffusion d'erreur comprennent des premiers moyens de multiplexage pour diffuser l'erreur sur le pixel courant en fonction d'informations définies dans lesdites commandes de moyens de multiplexage et relatives à des conditions de multiplexage de l'erreur à reporter sur le pixel courant.

Selon une autre particularité, les moyens de répartition d'erreur comprennent des seconds moyens de multiplexage, formant la première et la deuxième unité de répartition d'erreur, pour ajouter lesdites données de diffusion d'erreur en fonction d'informations définies dans lesdites commandes de moyens de multiplexage et relatives à des conditions de multiplexage de données représentatives d'une trace de mémoire de stockage du pixel courant.

Selon une autre particularité, le circuit de traitement comporte un module de calcul conçu pour produire les données de diffusion d'erreur, ledit module de calcul disposant d'au moins une première liaison de sortie vers les seconds moyens de multiplexage ainsi que d'une liaison supplémentaire vers une unité de stockage temporaire, formant tampon et stockant temporairement des données de diffusion d'erreur, lesdits seconds moyens de multiplexage étant aptes à utiliser les informations sur les conditions de multiplexage de la trace de mémoire de stockage du pixel courant, de façon à envoyer les données de diffusion d'erreur produites par le module de calcul dans une mémoire interne s'il s'agit d'erreur à diffuser dans le même bloc ou sinon dans une mémoire externe au circuit de traitement.

Selon une autre particularité, les moyens de stockage d'entrée sont agencés pour diviser les données d'entrée en une pluralité de blocs de pixels de hauteur uniforme dimensionnés pour former des rangées de blocs de façon à permettre un balayage horizontal des blocs de pixels par l'unité de sélection.

Selon une autre particularité, les moyens de stockage d'entrée sont agencés pour diviser les données d'entrée en une pluralité de blocs de pixels de largeur uniforme dimensionnés pour former des colonnes de blocs de façon à permettre un balayage vertical des blocs de pixels par l'unité de sélection.

### BREVE DESCRIPTION DES DESSINS

D'autres particularités et avantages de la présente invention apparaîtront plus clairement à la lecture de la description ci-après, faite en référence aux dessins annexés, dans lesquels :
- la figure 1 représente un schéma de principe général du fonctionnement du système selon l'invention,
- la figure 2A représente la structure des commandes de la table de décision avec un seul départ de chemin dans le bloc,
- la figure 2B représente la structure des commandes de la table de décision avec plusieurs départs de chemin dans le bloc
- la figure 3A représente le découpage de l'image en blocs et le découpage des blocs en pixels,
- la figure 3B illustre les orientations possibles de chemin de parcours selon la présente invention pour un pixel courant d'un bloc de pixels,
- les figures 4 et 5 représente deux exemples différents de parcours de tous les pixels d'un bloc selon l'invention, suivant un chemin de parcours continu,
- la figure 6 représente un exemple de module d'adressage par incrémentation-désincrémentation des coordonnées de pixel selon l'évolution d'un chemin de parcours à l'intérieur d'un bloc,
- la figure 7 représente un type de tramage à chemins multiples pour un bloc de pixels, chaque chemin ayant au moins 4 orientations distinctes,
- la figure 8 représente un exemple de réalisation d'architecture permettant le calcul des erreurs à diffuser ainsi que le stockage de ces erreurs,
- la figure 9 représente un logigramme de déroulement des étapes du processus selon l'invention.

### DESCRIPTION DES MODES DE REALISATION PREFERES DE L'INVENTION

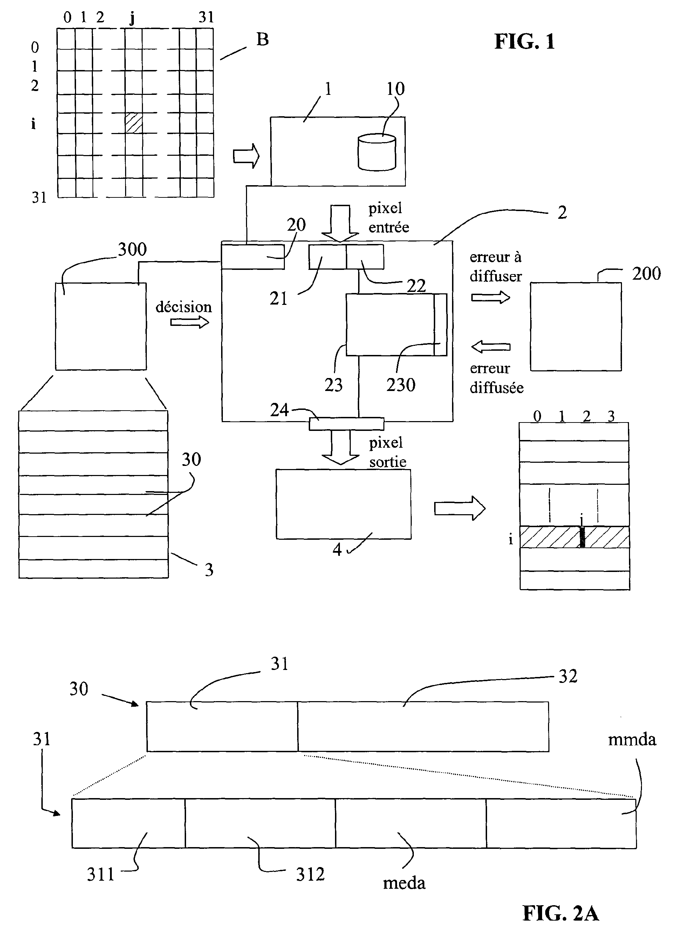

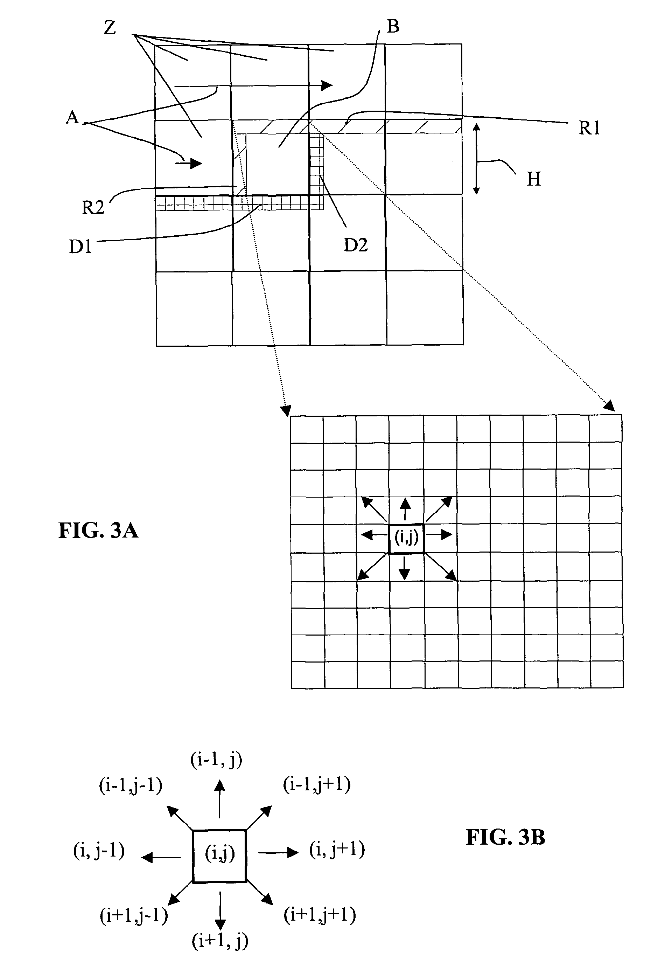

La présente invention va à présent être décrite en liaison avec les figures 1, 3A et 3B.

La figure 1 représente schématiquement l'architecture du tramage utilisée par le système d'établissement de trame selon l'invention, avec utilisation d'une table de décision permettant de suivre un ou plusieurs chemins de parcours variés des pixels d'un bloc de la trame. On rappelle ici que la trame est une représentation de l'image sous forme d'une matrice de pixels, mémorisée dans des moyens de stockage de l'image à traiter. La matrice de pixels est selon l'invention décomposée en une pluralité de blocs de pixels (B), comme illustré à la figure 3A. Dans les traitements réalisés sur une trame en suivant un chemin de parcours de type linéaire, l'erreur d'un pixel traité est diffusée sur les pixels suivants et voisins dans la trame, c'est-à-dire sur celui qui suit ce pixel traité dans la même ligne ainsi que ceux se trouvant sur la ligne suivante et entourant ce pixel traité. La diffusion d'erreur réalisée selon l'invention est différente de ce schéma classique de diffusion car la propagation des erreurs aux limites du bloc répond à des critères différents et d'autre part le chemin de parcours à l'intérieur d'un bloc de pixels (B) peut être sinueux ou non linéaire.

L'invention propose un système d'établissement d'un tramage par zone d'une image qui est particulièrement adapté pour effectuer un traitement par bloc avec des variantes de chemin de diffusion d'erreur. Ces variantes sont adaptées en fonction du cheminement de parcours du bloc de pixels (B). Ce système comporte un circuit de traitement (2), des moyens d'entrée d'image (1) conçus pour fournir en entrée du circuit de traitement (2) des données d'entrée, devant être affichées ou imprimées, représentatives de pixels d'une image numérique en correspondance avec une image d'entrée courante. Dans le mode de réalisation de la figure 1, les moyens d'entrée d'image (1) incluent des moyens de stockage d'entrée (10) conçus pour diviser et stocker les données d'entrée en une pluralité de blocs de pixels (B). Ces blocs (B), représentatifs d'une zone de l'image, sont dimensionnés pour former des rangées de blocs de hauteur (H) uniforme, comme illustré à la figure 3A.

L'image d'entrée peut ainsi être traitée bloc par bloc de manière séquentielle selon le sens de la flèche (A) représentée à la figure 3A. Les blocs (B) ne sont pas nécessairement de la même taille mais leur hauteur reste constante pour une même rangée de blocs de pixels (B).

Dans une variante de réalisation, le traitement successif bloc par bloc de chacune des zones ne se fait pas par un balayage horizontal mais par un balayage vertical. Les moyens de stockage d'entrée (10) peuvent en effet être agencés pour diviser les données d'entrée en des blocs de pixels (B) de largeur uniforme, dimensionnés pour former des colonnes de blocs, de façon à permettre un balayage vertical des blocs de pixels (B).

Une unité de sélection (20) est par exemple prévue dans le circuit de traitement (2) pour sélectionner et permettre le traitement successif bloc par bloc de chacune des zones selon un balayage de l'image horizontal ou vertical. La taille du bloc peut être par exemple de 32x32 pixels comme représenté à la figure 1 ou de 16x24 pixels ou tout autre format pratique de découpage. Un pixel peut avoir une pluralité de composantes différentes (composantes de couleur, de luminosité). Par exemple pour six composantes, la taille d'un tampon permettant de stocker un bloc de pixels (B) peut être, de manière non limitative, de 32x32x6 bits. L'unité de sélection (20) peut permettre également la sélection de la table de décision (3) correspondant au bloc de pixels (B) à traiter. Un traitement composante par composante peut naturellement être réalisé suivant l'invention, chaque composante étant traitée de manière indépendante lors du traitement des blocs de pixels (B).

Dans le mode de réalisation préféré de l'invention, le système d'établissement d'un tramage par zone comporte une mémoire spécifique de programmation (300) permettant de stocker des tables de décisions (3), associées chacune à des zones de l'image. Chaque table de décisions (3) comporte des données représentatives de décisions de traitement fonction d'au moins un chemin de parcours déterminé, de type non linéaire, des pixels correspondant à la zone traitée de l'image. Le chemin de parcours des pixels à l'intérieur de la zone comprend entre trois et huit orientations distinctes, et préférentiellement entre quatre et huit orientations distinctes. Comme représenté aux figures 3A et 3B, une incrémentation ou une désincrémentation de chacune des coordonnées [i, j] d'un pixel courant peut être effectuée suivant le chemin suivi pour le parcours des pixels du bloc (B).

L'invention va à présent être décrite en liaison avec les figures 1, 2A et 2C.

La mémoire spécifique de programmation (300) stocke chacune des tables de décisions (3) sous la forme d'une succession de données (30) représentatives de décisions de traitement pour un pixel courant, empilées suivant un ordre défini par le chemin de parcours déterminé des pixels du bloc (B). Les données (30) correspondant aux décisions de traitement peuvent contenir tous les éléments d'information nécessaires au traitement d'un pixel. Ces données (30) sont notamment représentatives en premier lieu de commandes de diffusion d'erreur et d'orientation du chemin de parcours pour le pixel courant et en second lieu, d'indications d'adressage associées à ce pixel courant. Comme montré à la figure 2A, le format de ces données (30) peut permettre de distinguer des premières données (31) de type commandes et des secondes données (32) de type adresses en mémoire. Les premières données (31) comprennent dans un premier champ (311) une indication de la direction du chemin de parcours et dans un second champ (312) l'identifiant d'un jeu de coefficients servant pour la diffusion d'erreur. Le jeu de coefficients dans le second champ correspond à l'ensemble des coefficients de diffusion d'erreur à prendre en compte pour la diffusion de l'erreur. L'indication dans le premier champ permet de connaître les coordonnées du pixel suivant et de savoir si l'on peut utiliser le tampon de rangée ou de la colonne pour stocker les erreurs déjà calculées. On comprend que, dans une variante de réalisation de l'invention, lorsque le chemin de parcours revient à tourner autour d'une position, il n'y ait pas besoin de mettre les erreurs dans des mémoires externes au circuit de traitement (2) mais simplement de les conserver dans des registres du circuit (2) pour les additionner ensuite avec les erreurs suivantes.

Les premières données (31) de type commandes comportent également des adresses (meda) de dictionnaire pour stocker des adresses de commande de multiplexage d'erreur ainsi que des adresses (mmda) de dictionnaire pour stocker des adresses de commande de multiplexage de mémoire. Il est ainsi prévu un troisième (meda) et un quatrième champ (mmda) permettant de définir respectivement les conditions de multiplexage de l'erreur à reporter sur le pixel, et les conditions de multiplexage de données représentatives d'une trace de la mémoire de stockage du pixel traité. Les dictionnaires sont utilisés pour stocker les commandes de multiplexeurs. Ces dictionnaires peuvent avantageusement dépendre du chemin de parcours et permettre de réaliser une compression au niveau du codage des commandes de multiplexeurs dans l'instruction. Les multiplexeurs permettent notamment d'indiquer vers quelle mémoire il faut envoyer les erreurs relevées pour le pixel courant. Les données (30) correspondant aux décisions de traitement sont par exemple fournies dans une instruction de 64 bits dont au moins 16 bits sont utilisés par les premières données (31) de type commandes. Les secondes données (32) définissant des adresses en mémoire peuvent être codées sur la partie restante de l'instruction.

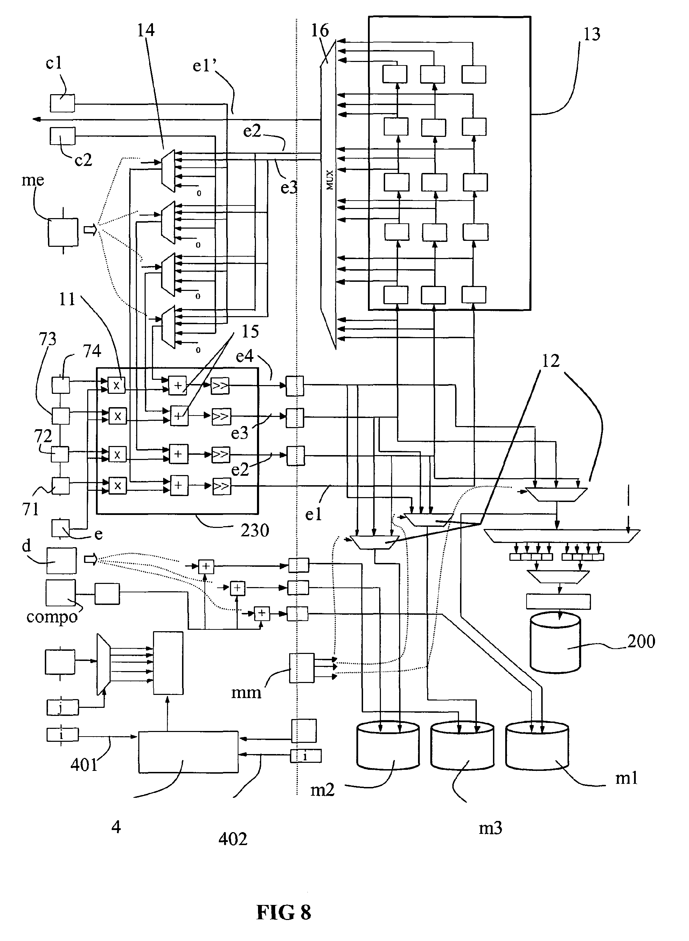

Comme représenté à la figure 2C, les secondes données (32) peuvent correspondre notamment à des données d'adressage pour lecture (rm1, rm2, rm3) et des données d'adressage pour écriture (wm1, wm2, wm3). Des données d'accès en lecture (61, 62, 63) ou en écriture (64, 65, 66) sont également prévues. Dans un mode de réalisation de l'invention, des tampons (m1, m2, m3, figure 8) sont prévus pour stocker les erreurs. Un des tampons (m1) peut être prévu pour stocker des erreurs « externes » au bloc de pixels (B) traité. Un ou plusieurs champs (60) peuvent être prévus en association avec les données d'adressage (61, 64) relatives à ce tampon (m1) pour différencier un premier cas dans lequel l'erreur est à diffuser dans le bloc (B) traité et un second cas dans lequel l'erreur est à diffuser dans un bloc voisin.

Comme illustré à la figure 1, le système d'établissement d'un tramage par zone est doté d'un module d'extraction (21) pour extraire depuis lesdits moyens de stockage d'entrée (10) des données représentatives d'un pixel courant sur ledit chemin de parcours. Ce module d'extraction (21) peut faire partie du circuit de traitement (2) ou être relié à ce dernier. Chaque pixel d'un bloc de pixels (B) extrait peut alors être traité par le circuit de traitement (2). Le système comporte également un module de lecture (22) appartenant au circuit de traitement (2) et conçu pour lire, dans la table de décisions (3) correspondante au bloc (B), les données (30) correspondant aux décisions de traitement. La lecture de ces données (30) fournit les coordonnées du pixel suivant à extraire du bloc, les commandes de moyens de multiplexage pour indiquer l'orientation du chemin de parcours ainsi que les adresses d'écriture ou de lecture de stockage des erreurs.

La table de décisions (3) est par exemple de la taille du bloc de pixels (B) associé, de façon à stocker les données de commandes/décisions permettant le traitement de chacun des pixels du bloc (B). Le module de lecture (22) est conçu pour réitérer une lecture de la table de décisions (3) pour chacun des pixels parcourus successivement dans un bloc (B) selon le chemin de parcours déterminé. Autrement dit, les données correspondant au pixel courant dans la table de décisions (3) sont lues linéairement par le module de lecture et donnent une séquence représentant le sens du chemin de parcours du bloc de pixels (B). Dans des variantes de réalisation, cette séquence peut être également agencée pour correspondre à plusieurs chemins de parcours distincts et complémentaires.

L'invention va à présent être décrite en liaison avec les figures 1, 3A, 4, 5, 6 et 8.

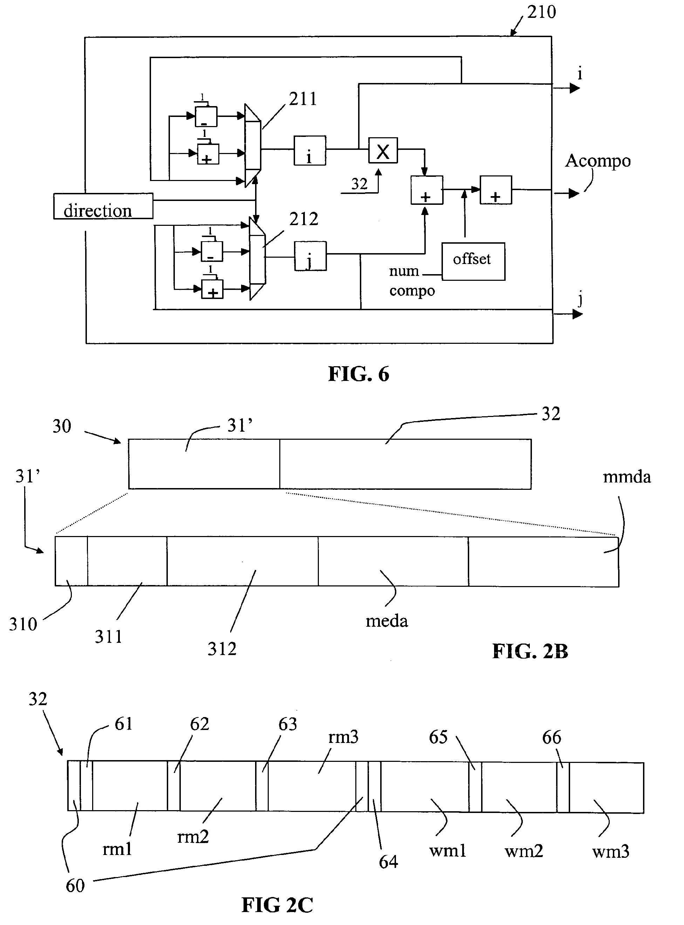

Dans un mode de réalisation de l'invention, le module d'extraction (21) incorpore un module d'adressage (210) tel qu'illustré à la figure 6. Ce module d'adressage (210) va définir l'incrémentation ou la désincrémentation des coordonnées [i,j] du pixel. Suivant l'évolution d'un chemin de parcours, définie par la valeur de la donnée direction à l'intérieur du bloc de pixels (B), ce module d'adressage (210) permet de définir des adresses (Acompo) de composantes de coordonnées qui servent d'adresse d'extraction du pixel suivant. Le fait d'incorporer dans le circuit de traitement (2) un tel module d'adressage (210) permet de programmer aisément les orientations de diffusion. Dans le mode de réalisation de la figure 6, la donnée direction fournie par le premier champ (311) va commander chacun des deux multiplexeurs (211, 212) pour incrémenter ou décrémenter la coordonnée i, respectivement j, et par addition générer les composantes (compo) de coordonnées pour obtenir l'adresse du pixel à extraire. Les données d'adressage issues des tables de décisions (3), qui permettent d'indiquer les coordonnées du premier pixel extrait d'un bloc de pixels (B), sont fournis au module d'adressage (210) pour initialiser la programmation des orientations de diffusion.

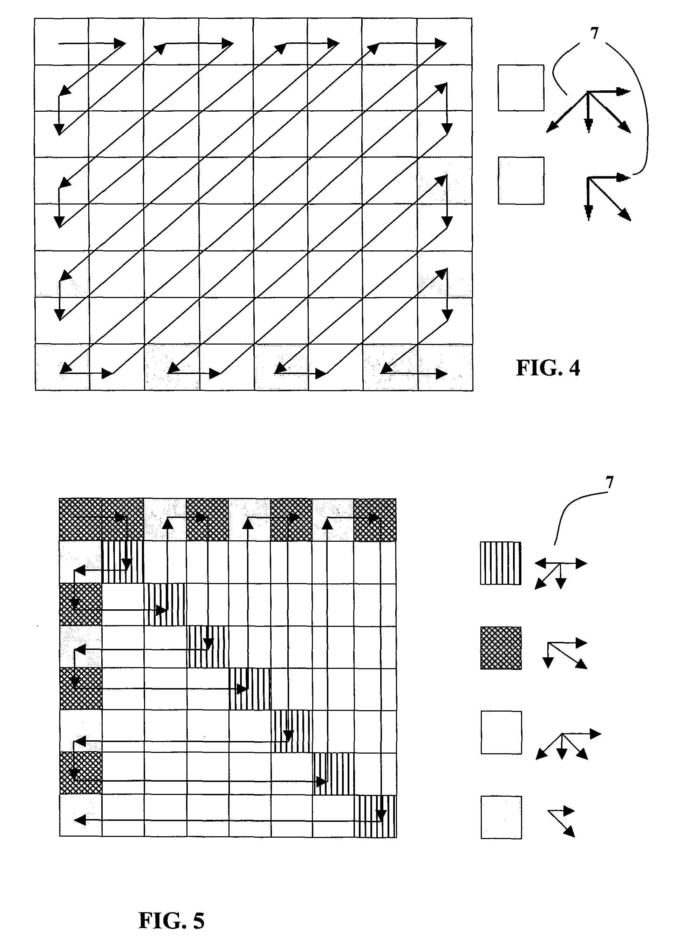

Le module d'extraction (21) est apte à fournir l'adresse d'extraction depuis les moyens de stockage d'entrée (10) d'un premier pixel prédéterminé appartenant à un bloc de pixels (B), puis extraire au fur et à mesure les pixels suivants en fonction des commandes d'orientation du chemin de parcours lues pour chaque pixel traité par le module de lecture (22). Comme représenté à la figure 4 ou à la figure 5, un seul chemin de parcours continu peut couvrir l'ensemble des pixels à l'intérieur d'un bloc de pixels (B). L'ordre dans lequel les pixels sont traités est indiqué par les flèches. Le chemin proposé par Jan P. Allebach et Ti-chiun Chang dans le document « Memory Efficient Error Diffusion », Color Imaging VIII: Processing, Hardcopy, and Applications, Reiner Eschbach, Gabriel G. Marcu, Editors, Proceedings of SPIE-IS&T Electronic Imaging, SPIE Vol. 5008 (2003), peut naturellement être utilisé, comme tout autre chemin de parcours approprié permettant de couvrir un bloc de pixels (B).

Dans un mode de réalisation de l'invention, le système d'établissement d'un tramage par zone comporte des moyens de diffusion d'erreur (23) conçus pour soumettre à une diffusion d'erreur le pixel courant de la zone traitée en fonction des données (30) de la table de décisions (3), afin de produire un pixel de sortie et des données de diffusion d'erreur. Comme représenté à la figure 3A, le bloc de pixels (B) en cours de traitement comporte deux zones (R1, R2) pour lesquelles des erreurs diffusées ont été récupérées lors du traitement des blocs (Z) précédents. Ce bloc de pixels (B) en cours de traitement est en outre adjacent à deux autres zones (D1, D2) de pixels non encore traités. Ces deux zones adjacentes (D1, D2) doivent recevoir les erreurs qui n'ont pas encore été diffusées. En référence avec la figure 3A, les erreurs associées à la zone (D1) adjacente située dans une rangée de blocs différente sont envoyées à une mémoire externe, grâce à l'unité de stockage temporaire formant tampon (200). Les erreurs associées à la zone (D2) adjacente situé dans le bloc de pixels suivant sont envoyées à la mémoire interne, par exemple dans un tampon spécifique (m1, figure 8).

Dans le mode de réalisation de la figure 8, trois mémoires formant des tampons respectifs (m1, m2 et m3) sont prévues pour permettre d'accélérer le traitement. Grâce à ces trois tampons (m1, m2, m3), jusqu'à trois accès en parallèle peuvent être réalisés. Au cours du traitement selon l'invention, chaque pixel reçoit des erreurs de ses pixels voisins. Lorsqu'un pixel a reçu toutes les erreurs qui lui sont associées, l'erreur résultante est stockée dans un premier tampon (m1), tandis que lorsque les erreurs ne sont pas complètes, elles sont stockées dans le deuxième et le troisième tampon (m2, m3). Il est possible dans certains autres cas d'envoyer les erreurs sur trois pixels différents en une fois, en utilisant simultanément les trois tampons (m1, m2, m3).

L'utilisation de tables de décisions (3) présente l'avantage que les données de diffusion vont être en adéquation avec le chemin de parcours complexe dans le bloc de pixels (B). Les moyens de diffusion d'erreur (23) sont conçus pour fournir des données de diffusion d'erreur représentatives de coefficients d'erreur à diffuser. Ces coefficients sont définis en fonction de données de commande de la table de décisions (3). Dans le mode de réalisation de la figure 1, le circuit de traitement (2) comporte un module de calcul (230) conçu pour produire les données de diffusion d'erreur. Ce module (230) est à la disposition des moyens de diffusion d'erreur (23). Ledit module de calcul (230) comporte par exemple une liaison de sortie vers l'unité de stockage temporaire formant tampon (200). Les données de diffusion d'erreur peuvent donc être mémorisées au fur et à mesure dans le tampon (200). Dans le mode de réalisation de la figure 1, les moyens de diffusion d'erreur (23) sont reliés à des moyens de sortie (24) de pixel pour que le pixel de sortie produit soit envoyé dans des moyens de stockage de sortie (4) mémorisant les pixels de sortie pour affichage ou impression.

La lecture par le module de lecture (22) des données (30) représentatives de décisions de traitement permet de fournir des commandes de moyens de multiplexage aux moyens de diffusion d'erreur (23) pour indiquer l'orientation du chemin de parcours ainsi que les adresses d'écriture ou de lecture pour le stockage des erreurs. Les moyens de diffusion d'erreur (23) peuvent en effet comprendre des premiers moyens de multiplexage (14) pour diffuser l'erreur sur le pixel courant en fonction des informations définies dans lesdites commandes de moyens de multiplexage. Ces commandes permettent d'établir les conditions de multiplexage de l'erreur à reporter sur le pixel courant. Les figures 4 et 5 illustrent des orientations (7) de diffusion d'erreurs qui sont fonction de la position du pixel courant dans le bloc (B) et notamment de l'orientation du chemin de parcours au niveau de ce pixel courant.

Dans un mode de réalisation de l'invention, grâce aux premières données (31) des décisions de traitement, il est non seulement permis de définir, par le champ (311), les directions et le sens du chemin de parcours, mais encore il est avantageusement défini dans le champ (312) un jeu de coefficients, chaque coefficient étant associé à chacune des orientations et servant à répercuter les erreurs. Certains des coefficients seront nuls, de sorte que l'erreur n'est pas diffusée dans toutes les directions. C'est alors l'utilisation de ces coefficients qui va permettre l'obtention des valeurs et la manière de diffuser des erreurs autour du pixel traité. Comme représenté aux figures 4 et 5, il peut n'y avoir pour un pixel traité que de 2 à quatre orientations (7) de diffusion d'erreurs, qui sont définies par l'intermédiaire des coefficients. Ce processus de diffusion peut naturellement être utilisé pour chacune des composantes associées à un pixel du bloc de pixels (B).

Les données représentatives des valeurs de coefficients peuvent être chargées dans des registres, pour subir des opérations d'addition et être utilisées dans des opérations de multiplexage, afin d'ajuster la répartition des erreurs comme on va l'expliciter ci-après pour la figure 8.

L'invention va à présent être décrite en liaison avec les figures 1, 2B, 3A, 7 et 8.

Dans un mode de réalisation de l'invention, le système d'établissement d'un tramage par zone comprend des moyens de répartition d'erreur pour ajouter lesdites données de diffusion d'erreur, d'une part à des pixels adjacents audit pixel d'entrée à l'intérieur de la zone correspondant au bloc de pixels (B) en cours de traitement, et d'autre part à des pixels adjacents audit pixel d'entrée et se trouvant à l'extérieur de cette zone. Une première unité de répartition d'erreur peut être prévue pour la répartition des erreurs à l'intérieur du bloc de pixels (B), tandis qu'une deuxième unité de répartition d'erreur peut permettre de répartir les erreurs vers les pixels d'autres blocs. La première unité de répartition d'erreur dispose par exemple d'une ou plusieurs mémoires internes au circuit de traitement (2), vers lesquelles sont diffusées les erreurs à diffuser à l'intérieur du bloc (B) en cours de traitement. La deuxième unité de répartition d'erreur est reliée à au moins une mémoire externe au circuit de traitement (2) servant à stocker les données correspondant aux erreurs à diffuser sur les zones (D1) de bordure externe des blocs de pixels (B) non traités. Ces données d'erreur dites externes, qui peuvent être mémorisées dans l'unité de stockage temporaire formant tampon (200) comme représenté à la figure 1, peuvent être ensuite renvoyées au circuit de traitement (2) lors du traitement des blocs (B) suivants.

La figure 8 représente un exemple de réalisation d'architecture d'un circuit, incorporant le module de calcul (230), permettant le calcul puis le stockage des erreurs à diffuser. Dans ce mode de réalisation, les moyens de répartition d'erreur comprennent des seconds moyens de multiplexage (12), formant la première et la deuxième unité de répartition d'erreur, pour ajouter lesdites données de diffusion d'erreur en fonction d'informations définies dans lesdites commandes de moyens de multiplexage. Ces informations sont relatives aux conditions de multiplexage de la trace de mémoire de stockage du pixel courant. Cette trace correspond à l'ensemble des adresses de lecture et d'écriture utilisées pour les trois tampons (m1, m2 m3) illustrés à la figure 8. Ces adresses sont obtenues à la génération des instructions par un compilateur ou module équivalent qui prend en compte les caractéristiques du chemin de parcours et des jeux de coefficients. Comme représenté à la figure 8, le module de calcul (230) peut comporter une pluralité d'opérateurs (11) prenant en compte chacun, d'une part les coefficients respectifs (71, 72, 73, 74) du jeu de coefficients fourni dans le deuxième champ (312) des premières données (31) de commandes, et d'autre part une donnée d'erreur (e) courante pour chaque opérateur (11) relative à des pixels voisins du pixel traité.

Un tampon spécifique, par exemple externe et relié au circuit de traitement (2), peut être prévu pour stocker et fournir les coefficients (71, 72, 73, 74) en fonctions des données (30) issues de la table de décisions (3). Des tampons (m1, m2, m3), également reliés au circuit de traitement (2), peuvent être prévus pour recevoir des données d'erreur à diffuser qui ne peuvent pas être stockées dans les moyens de stockage temporaire (13) ou dans le tampon externe (200). Cette unité (200) sert par exemple uniquement à stocker les erreurs dites externes, c'est-à-dire des erreurs qui doivent être diffusées dans un autre bloc de pixels que le bloc (B) en cours de traitement.

Dans un mode de réalisation préféré de l'invention, les accès en lecture/écriture dans le bloc (B) en cours de traitement peuvent être réalisés, pour chaque composante, sous la forme d'un accès en lecture/écriture en parallèle dans les tampons dédiés (m1, m2 et m3). Pour toutes les composantes de la première ligne du bloc de pixels (B), le traitement peut comporter un accès en lecture dans l'unité externe de stockage temporaire (200). Les données à prendre en compte, obtenues lors du traitement précédent d'un ou plusieurs blocs voisins (Z, figure 3A), sont donc présentes dans cette unité (200). Pour toutes les composantes de la dernière ligne de pixels du bloc de pixels (B), le traitement peut comporter un ou plusieurs accès en écriture dans l'unité de stockage externe (200), une donnée étant envoyée pour chacune des composantes de pixel dans ladite unité (200).

Chaque sortie d'un opérateur (11) est envoyée sur une entrée d'un additionneur (15) recevant sur sa deuxième entrée la sortie de chacun des circuits multiplexeurs formant les premiers moyens de multiplexage (14). Chaque circuit multiplexeur des premiers moyens de multiplexage (14) détermine, en fonction des données (me) de multiplexage d'erreur fournies dans le quatrième champ de la commande représentée à la figure 2B, la valeur de l'erreur à utiliser parmi celles (e2, e3) issues des moyens de stockage temporaire (13) ou celles (c1, c2) lues dans les tampons d'erreur (m2, m3) selon les données d'adressage de lecture (rm2, rm3).

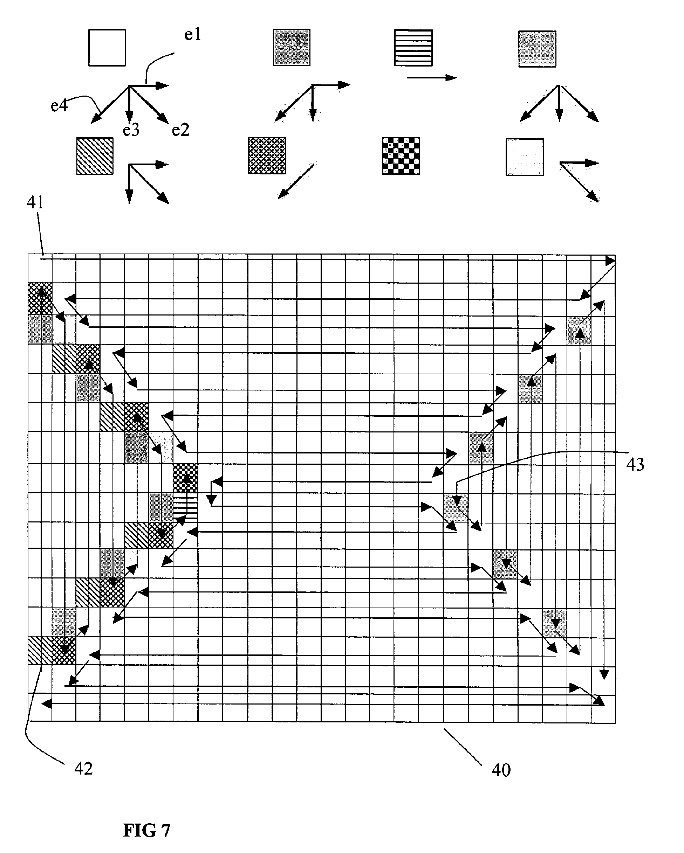

Le module de calcul (230) calcule par exemple jusqu'à quatre erreurs (e1, e2, e3, e4) pour chaque composante de pixels. La figure 7 illustre le fait que certains pixels à l'intérieur du bloc correspondent à quatre orientations pour diffuser ces erreurs (e1, e2, e3, e4), tandis que d'autres pixels (en grisé différent) correspondent à un nombre moindre d'orientation de diffusion.

La figure 7 représente en outre un cas de figure pour lequel plusieurs chemins de parcours complémentaires sont envisagés dans le bloc de pixels (B). Dans l'exemple de la figure 7, il y a trois chemins de parcours du bloc dont les coordonnées de départ sont distinctes. La zone (40) ainsi couverte comprend trois points de départ différents (41, 42, 43) pour le tramage. Dans le mode de réalisation de la figure 7, les données (30) des tables de décisions (3) peuvent comporter des données représentatives du départ ou de la continuité de chacun des chemins de parcours. En pratique, pour un tel type de tramage à chemins multiples, des bits de contrôle sont par exemple ajoutés dans un champ (310) supplémentaire, comme illustré à la figure 2B. Selon cette variante de réalisation, les premières données (31') de type commandes contiennent donc les bits de contrôle qui servent à indiquer le jeu de coordonnées de pixels à utiliser. Par exemples, avec simplement 2 bits de contrôle, il est possible de distinguer les coordonnées à prendre en compte :
- avec 00, les coordonnées initiales du chemin de parcours ;
- avec 01, le nouveau jeu de coordonnées associé au départ d'un nouveau chemin de parcours ;
- avec 11, utiliser le champ (311) qui indique l'orientation à suivre pour continuer le chemin en cours, pour calculer le jeu suivant de cordonnées de pixel.

Ces bits de contrôle ou tout autre type de données représentatives du départ ou de la continuité du chemin de parcours passant par le pixel en cours de traitement, sont ajoutés pour chaque pixel aux données (30) des tables de décisions (3). En référence avec l'exemple de la figure 7, on comprend que la zone peut être parcourue en commençant par un premier départ (41) de chemin de parcours, en poursuivant avec un deuxième départ (42) d'un chemin de parcours différent servant à couvrir la partie gauche de la zone, puis en terminant avec un troisième départ (43) de chemin de parcours différent servant à couvrir des pixels de partie droite de la zone. Le fait d'utiliser des tables de décisions (3) permet d'envisager de très nombreuses possibilités de parcours pour réaliser le tramage par zone. En outre, le fait d'incorporer dans les données (31) de commandes, en premier lieu des données d'adresses de dictionnaire pour multiplexage d'erreur (meda), et en second lieu des données d'adresses de dictionnaire pour multiplexage de mémoire (mmda), permet de générer les commandes nécessaires (me, mm) pour contrôler le multiplexage des multiplexeurs utilisés dans l'invention.

En référence avec la figure 8, le module de calcul (230) dispose d'au moins une première liaison de sortie vers des seconds moyens de multiplexage (12). Les seconds moyens de multiplexage (12) sont aptes à utiliser les informations sur les conditions de multiplexage de la trace de mémoire de stockage du pixel courant, de façon à envoyer les données de diffusion d'erreur produites par le module de calcul (230) dans une mémoire interne (m1, m2, m3) s'il s'agit d'erreur à diffuser dans le même bloc (B) ou sinon dans une mémoire formant tampon (200) externe au circuit de traitement (2). Une liaison supplémentaire est prévue pour relier par exemple ce module de calcul (230) à l'unité de stockage temporaire formant tampon (200).

Les seconds moyens de multiplexage (12) forment à la fois la première et la seconde unité de répartition d'erreur, puisqu'ils permettent de répartir par exemple des erreurs à l'intérieur du bloc de pixels (B), en envoyant des données d'erreurs "internes" au bloc (B) traité dans les tampons (m1, m2, m3) et des erreurs à l'extérieur du bloc de pixels (B) en envoyant des données d'erreur "externes" au bloc (B) traité dans le tampon (200) formé par ladite unité de stockage temporaire. Par ailleurs, le module de calcul (230) dispose également d'une seconde liaison de sortie pour stocker les coefficients de répercussion d'erreurs dans des moyens de stockage temporaire (13). Comme illustré à la figure 8, trois erreurs (e1, e2, e3) peuvent être stockées, via une boucle, dans les moyens de stockage temporaire (13) et peuvent être utilisées par un multiplexeur (16). Ce multiplexeur (16) transmet dans un premier temps deux erreurs pour le pixel courant (e2, e3) et une erreur (e1') à diffuser sur le prochain pixel. Dans un second temps, les données (me) issues du quatrième champ de la commande représentée à la figure 2B sont utilisées pour obtenir des données de commande qui doivent servir aux premiers moyens de multiplexage (14). Des erreurs partielles (c1, c2), issues des tampons (m2, m3) servant à stocker des données d'erreurs "internes" au bloc traité, peuvent également être utilisées par les premiers moyens de multiplexage (14), comme illustré à la figure 8.

Les adresses (Acompo) des composantes de coordonnées du pixel obtenues selon le mode de réalisation de la figure 6 sont par exemple utilisées pour définir l'adressage mémoire à réaliser en fonction des coordonnées du pixel à traiter. Des données (compo) représentatives de la composante de pixel en cours de traitement servent à calculer les adresses d'écriture dans les tampons (m1, m2, m3). Certaines données (d) issues des données (30) de la table de décisions (3) sont également utilisées pour définir les adresses d'écriture dans les tampons (m1, m2, m3). Des données lues (401) ou écrites (402) relatives au pixel de sortie sont lues ou écrites au niveau des moyens de stockage de sortie (4). Nous ne rentrerons pas plus dans les détails de la figure 8 non essentiels à la compréhension de l'invention, certains détails relevant des connaissances usuelles de la personne du métier.

Le circuit de traitement (2) peut se présenter, dans un mode de réalisation de l'invention, sous la forme d'un circuit intégré doté d'une pluralité d'étages. Le circuit intégré comporte par exemple un premier ensemble d'étages qui permet d'effectuer les adressages des pixels pour accéder aux pixels d'un bloc (B) selon le chemin de parcours souhaité, défini par une valeur de direction. L'adressage est effectué par la définition des données (30) issues des tables de décision (3). Le module d'adressage (210) représenté à la figure 6 est incorporé dans ce premier ensemble. Le circuit intégré comporte également un second ensemble d'étages, pouvant correspondre au mode de réalisation de la figure 8, dans lequel sont réalisés le calcul et le stockage des erreurs à propager sur les pixels futurs à traiter selon le cheminement choisi. Des étages intermédiaires sont prévus pour par exemple :
- définir l'entrée du pixel à traiter ;
- réaliser les calculs d'adressage en mémoire ;
- définir l'accès en mémoire ;
- "seuiller" chaque composante pour définir le résultat de la diffusion d'erreur.

L'invention va à présent être décrite en référence avec les figures 1 et 7 et 9.

Le procédé de tramage selon l'invention repose avantageusement sur l'utilisation d'une table de décisions (3) pour suive un ou plusieurs chemins de parcours. Des registres spécifiques permettent de coder plusieurs départs (41, 42, 43) de chemin dans un bloc de pixels (B). Au cours de l'établissement d'une trame, le procédé selon l'invention est itéré pour tous les pixels de la trame.

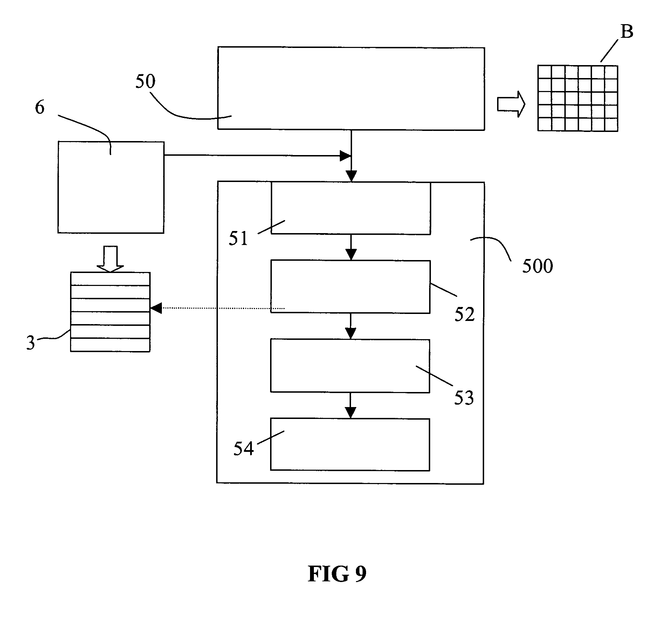

Le procédé d'établissement d'un tramage par zone, en mode diffusion d'erreur de données d'image devant être affichées ou imprimées, est mis en oeuvre par l'intermédiaire du circuit de traitement (2). Les données d'entrée, représentatives de pixels d'une image numérique, sont fournies en entrée de ce circuit de traitement (2) en correspondance avec une image d'entrée courante. Comme représenté à la figure 9, le procédé débute avec une première étape (50) de mémorisation pour stocker des données d'entrée dans des moyens de stockage d'entrée (10), sous la forme de blocs de pixels (B) représentatifs d'une zone de l'image.

Une deuxième étape (6) de mémorisation est également réalisée pour stocker dans une mémoire spécifique de programmation (300) des tables de décisions (3). Cette étape (6) consiste à réaliser le stockage de chacune des tables de décisions sous la forme d'une succession de données représentatives de décisions de traitement pour un pixel courant, empilées suivant un ordre défini par le chemin de parcours déterminé des pixels du bloc. Les données (30) stockées dans ces tables (3) sont donc représentatives des décisions de traitement de propagation des erreurs en fonction du ou des chemins de parcours des pixels dans le bloc (B).

Le processus comprend alors essentiellement une étape (500) de traitement successif bloc par bloc de chacune des zones de l'image à traiter, par exemple par balayage horizontal. En variante, ce balayage peut être vertical. Comme illustré à la figure 9, ladite étape (500) de traitement comprend, pour chacun des blocs de pixels (B) :
- une étape (51) d'extraction de données représentatives d'un pixel courant sur le chemin de parcours ;
- une étape (52) de lecture, dans la table de décisions (3) correspondante au bloc de pixels (B), de données notamment représentatives en premier lieu de commandes de diffusion d'erreur et d'orientation du chemin de parcours pour le pixel courant et en second lieu, d'indications d'adressage associées à ce pixel courant définissant le multiplexage d'erreur (me) et le multiplexage mémoire (mm) ;
- une étape (53) de diffusion d'erreur fonction des données de la table de décisions (3) pour soumettre à une diffusion d'erreur le pixel courant dans le bloc (B) traité afin de produire un pixel de sortie et des données de diffusion d'erreur ;
- une étape (54) de répartition d'erreur permettant d'ajouter lesdites données de diffusion d'erreur, d'une part à des pixels adjacents audit pixel d'entrée à l'intérieur du bloc de pixels (B) par une première unité de répartition d'erreur, et d'autre part à des pixels adjacents audit pixel d'entrée à l'extérieur de la zone correspondante par une deuxième unité de répartition d'erreur.

L'étape (51) d'extraction peut consister à extraire depuis les moyens de stockage d'entrée (10) un premier pixel prédéterminé d'un bloc de pixels (B), puis extraire au fur et à mesure les pixels suivants en fonction des commandes d'orientation du chemin de parcours lues à chaque pixel traité. Ces commandes d'orientations sont définies dans le premier champ (311) tel qu'illustré à la figure 2A. Lorsqu'il y a plusieurs chemins de parcours, comme représenté à la figure 7, alors l'extraction se réinitialise à chaque départ de chemin.

L'étape (53) de diffusion d'erreur fournit des données de diffusion d'erreur représentatives de coefficients d'erreur à diffuser. Ces coefficients d'erreur sont définis en fonction des données (31) de commande de la table de décisions (3). Le pixel de sortie produit lors de l'étape (53) de diffusion d'erreur est envoyé par les moyens de sortie de pixel (24) dans des moyens de stockage de sortie (4) stockant les pixels de sortie pour affichage ou impression.

L'un des avantages de l'invention réside dans l'adaptabilité à de nombreux types de chemins pour réaliser le tramage par zone. L'invention permet d'utiliser très efficacement la méthode de diffusion d'erreur par bloc, en suivant un ou plusieurs chemins de diffusion complexes. De plus le procédé selon l'invention est mis en oeuvre sur un circuit intégré qui demeure de complexité raisonnable.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'établissement d'un tramage par zone en mode diffusion d'erreur de données d'image devant être affichées ou imprimées, dans lequel des données d'entrée représentatives de pixels d'une image numérique sont fournies en entrée d'un circuit de traitement (2) en correspondance avec une image d'entrée courante, comportant une première étape (50) de mémorisation pour stocker des données d'entrée, dans des moyens de stockage d'entrée (10), sous la forme de blocs de pixels (B) représentatifs d'une zone de l'image, ledit procédé étant **caractérisé en ce qu'**il comprend :
- une deuxième étape (6) de mémorisation pour stocker dans une mémoire spécifique de programmation (300) des tables de décisions (3), associées chacune à des zones de l'image, incluant des données (30) représentatives de décisions de traitement fonction d'au moins un chemin de parcours déterminé de type non linéaire des pixels correspondant à une zone de l'image, la deuxième étape (6) de mémorisation comprenant une pluralité d'opérations de stockage, dans la mémoire spécifique de programmation (300), pour stocker chacune des tables de décisions (3) sous la forme d'une succession de données (30) représentatives de décisions de traitement pour un pixel courant, empilées suivant un ordre défini par ledit chemin de parcours déterminé des pixels du bloc (B),
- une étape (500) de traitement successif bloc par bloc de chacune des zones par balayage horizontal, incluant pour chacun des blocs une étape (51) d'extraction de données représentatives d'un pixel courant sur ledit chemin de parcours, une étape (52) de lecture dans la table de décisions (3) correspondante au bloc (B), utilisant un module de lecture (22) pour lire des données notamment représentatives en premier lieu de commandes de diffusion d'erreur et d'orientation du chemin de parcours pour le pixel courant et en second lieu, d'indications d'adressage associées à ce pixel courant, ainsi qu'une étape (53) de diffusion d'erreur fonction des données (30) de la table de décisions (3) pour soumettre à une diffusion d'erreur le pixel courant de la zone traitée afin de produire un pixel de sortie et des données de diffusion d'erreur, ledit chemin de parcours à l'intérieur d'une zone comprenant au moins quatre orientations distinctes, et
- une étape de prise en compte du cheminement de parcours d'un bloc pour ajuster les reports d'erreur et modifier les directions et coefficients de report d'erreurs en fonction des orientations dudit chemin de parcours de façon à produire une image convenable.

2. Procédé selon la revendication 1, dans lequel ladite étape (500) de traitement comprend en outre, pour chacun des blocs, une étape (54) de répartition d'erreur permettant d'ajouter lesdites données de diffusion d'erreur, d'une part à des pixels adjacents audit pixel d'entrée à l'intérieur de la zone correspondante par une première unité de répartition d'erreur, et d'autre part à des pixels adjacents audit pixel d'entrée à l'extérieur de la zone correspondante par une deuxième unité de répartition d'erreur.

3. Procédé selon la revendication 1 ou 2, dans lequel la première étape (50) de mémorisation comprend une division en une pluralité de blocs de pixels (B) des données d'entrée, réalisée par les moyens de stockage d'entrée (10), les blocs de pixels (B) étant dimensionnés pour former des rangées de blocs (B) de hauteur (H) uniforme, ces rangées de blocs (B) étant traitées selon un balayage horizontal de gauche à droite.

4. Procédé selon une des revendications 1 à 3, dans lequel l'étape (52) de lecture dans la table de décisions (3) comprend une lecture linéaire des données correspondant au pixel courant.

5. Procédé selon l'une quelconque des revendications 1 à 3, dans lequel l'étape (52) de lecture dans la table de décisions (3) est réitérée pour chacun des pixels parcourus successivement dans un bloc (B) selon le chemin de parcours déterminé et comprend la lecture des coordonnées du pixel suivant à extraire du bloc (B), de commandes de moyens de multiplexage pour indiquer l'orientation du chemin de parcours ainsi que d'adresses d'écriture ou de lecture pour le stockage des erreurs.

6. Procédé selon l'une quelconque des revendications 1 à 5, dans lequel l'étape (51) d'extraction consiste à extraire depuis les moyens de stockage d'entrée (10) un premier pixel prédéterminé d'un bloc de pixels (B), puis extraire au fur et à mesure les pixels suivants en fonction des commandes d'orientation du chemin de parcours lues à chaque pixel traité.

7. Procédé selon l'une quelconque des revendications 1 à 6, dans lequel les orientations de diffusion sont programmées par un module d'adressage (210) par incrémentation-désincrémentation des coordonnées du pixel courant en fonction des données (30) de la table de décisions (3), des données d'adressage indiquant les coordonnées du premier pixel extrait d'un bloc (B) étant fournies au module d'adressage (210) pour initialiser la programmation des orientations de diffusion, le chemin de parcours déterminé comprenant de quatre à huit orientations distinctes.

8. Procédé selon l'une quelconque des revendications 1 à 7, dans lequel l'étape (53) de diffusion d'erreur fournit des données de diffusion d'erreur représentatives de coefficients d'erreur à diffuser définis en fonction de données de commande (31) de la table de décisions (3), le pixel de sortie produit lors de l'étape (53) de diffusion d'erreur étant envoyé par des moyens (24) de sortie de pixel dans des moyens de stockage de sortie (4) stockant les pixels de sortie pour affichage ou impression.

9. Procédé selon l'une quelconque des revendications 6 à 8, dans lequel des conditions de multiplexage de l'erreur à reporter sur le pixel courant ainsi que des conditions de multiplexage de données représentatives d'une trace de mémoire de stockage du pixel courant sont définies au cours de la deuxième étape (6) de mémorisation dans les commandes de moyens de multiplexage, des informations sur les conditions de multiplexage de l'erreur à reporter sur le pixel courant étant transmises à des premiers moyens de multiplexage (14) pour diffuser l'erreur sur le pixel courant, tandis que des informations sur les conditions de multiplexage de données représentatives d'une trace de mémoire de stockage du pixel courant sont transmises à des seconds moyens de multiplexage (12) formant lesdites première et deuxième unités de répartition d'erreur.

10. Procédé selon la revendication 9, dans lequel l'étape (53) de diffusion d'erreur fournit des données de diffusion d'erreur produites par un module de calcul (230) disposant d'au moins une première liaison de sortie vers les seconds moyens de multiplexage (12) ainsi que d'une liaison supplémentaire vers une unité de stockage temporaire, formant tampon (200) et stockant temporairement des données de diffusion d'erreur, les informations sur les conditions de multiplexage de la trace de mémoire de stockage du pixel courant étant utilisées par les seconds moyens de multiplexage (12) de façon à envoyer les données de diffusion d'erreur produites par le module de calcul (230) dans une mémoire interne (m1, m2, m3) s'il s'agit d'erreur à diffuser dans le même bloc (B) ou sinon dans une mémoire externe au circuit de traitement (2).

11. Procédé selon l'une quelconque des revendications 1 à 10, **caractérisé en ce que** la première étape (50) de mémorisation comporte une division, réalisée par les moyens de stockage d'entrée (10), des données d'entrée en une pluralité de blocs de pixels (B) de largeur uniforme dimensionnés pour former des colonnes de blocs (B), le balayage des blocs (B) horizontal étant remplacé par un balayage vertical.

12. Procédé selon l'une quelconque des revendications 1 à 11, dans lequel plusieurs chemins de parcours complémentaires, ayant des coordonnées de départ distinctes, sont utilisés pour couvrir une zone de l'image correspondant à un bloc de pixels (B), les données (30) des tables de décisions (3) comprenant pour chacun des pixels des données représentatives du départ ou de la continuité du chemin de parcours passant par ce pixel.

13. Procédé selon l'une quelconque des revendications 1 à 12, dans lequel la première étape (50) de mémorisation comprend le stockage d'une pluralité de composantes pour chacun des pixels d'un bloc de pixels (B), chaque composante étant traitée de manière indépendante lors du traitement des blocs de pixels (B).

14. Système d'établissement d'un tramage par zone d'une image adapté pour utiliser des variantes de chemin de diffusion d'erreur, comportant un circuit de traitement (2), des moyens d'entrée d'image (1) conçus pour fournir en entrée du circuit de traitement (2) des données d'entrée devant être affichées ou imprimées représentatives de pixels d'une image numérique en correspondance avec une image d'entrée courante, **caractérisé en ce qu'**il comprend :
- des moyens de stockage d'entrée (10) conçus pour diviser et stocker les données d'entrée en une pluralité de blocs de pixels (B) représentatifs d'une zone de l'image ;
- une mémoire spécifique de programmation (300) permettant de stocker des tables de décisions (3), associées chacune à des zones de l'image, les tables de décisions (3) incluant des données (30) représentatives de décisions de traitement fonction d'au moins un chemin de parcours déterminé de type non linéaire des pixels correspondant à une zone de l'image, la mémoire spécifique de programmation (300) stockant chacune des tables de décisions (3) sous la forme d'une succession de données (30) représentatives de décisions de traitement pour un pixel courant, empilées suivant un ordre défini par le chemin de parcours déterminé des pixels du bloc, ledit chemin de parcours à l'intérieur d'une zone comprenant au moins quatre orientations distinctes ;
- une unité de sélection (20) dans le circuit de traitement (2) pour sélectionner et permettre le traitement successif bloc par bloc de chacune des zones selon un balayage de l'image horizontal ou vertical ;
- un module d'extraction (21) pour extraire depuis lesdits moyens de stockage d'entrée (10) des données représentatives d'un pixel courant sur ledit chemin de parcours ;
- un module de lecture (22) dans le circuit de traitement (2) conçu pour lire, dans la table de décisions (3) correspondante au bloc (B), des données notamment représentatives en premier lieu de commandes de diffusion d'erreur et d'orientation du chemin de parcours pour le pixel courant et en second lieu, d'indications (32) d'adressage associées à ce pixel courant ;
- des moyens de diffusion d'erreur (23) conçus pour soumettre à une diffusion d'erreur le pixel courant de la zone traitée en fonction des données (30) de la table de décisions (3), afin de produire un pixel de sortie et des données de diffusion d'erreur ;
- des moyens de répartition d'erreur pour ajouter lesdites données de diffusion d'erreur, d'une part à des pixels adjacents audit pixel d'entrée à l'intérieur de la zone correspondante par une première unité de répartition d'erreur, et d'autre part à des pixels adjacents audit pixel d'entrée à l'extérieur de la zone correspondante par une deuxième unité de répartition d'erreur.

15. Système selon la revendication 14, dans lequel le module de lecture (22) est agencé pour lire de manière linéaire les données correspondant au pixel courant dans la table de décisions (3).

16. Système selon la revendication 14 ou 15, dans lequel le module de lecture (22) est conçu pour réitérer une lecture dans la table de décisions (3) pour chacun des pixels parcourus successivement dans un bloc (B) selon le chemin de parcours déterminé, les données lues comprenant des coordonnées du pixel suivant à extraire du bloc (B), des commandes de moyens de multiplexage pour indiquer l'orientation du chemin de parcours ainsi que des adresses d'écriture ou de lecture pour le stockage des erreurs.

17. Système selon l'une des revendications 14 à 16, dans lequel le module d'extraction (21) est apte à extraire depuis les moyens de stockage d'entrée (10) un premier pixel prédéterminé d'un bloc de pixels (B), puis extraire au fur et à mesure les pixels suivants en fonction des commandes d'orientation du chemin de parcours lues pour chaque pixel traité par le module de lecture (22).

18. Système selon l'une quelconque des revendications 14 à 17, dans lequel le circuit de traitement (2) comprend un module d'adressage (210) agencé pour programmer les orientations de diffusion par incrémentation-désincrémentation des coordonnées du pixel courant en fonction des données (30) de la table de décisions (3), des données d'adressage permettant d'indiquer les coordonnées du premier pixel extrait d'un bloc (B) étant fournies au module d'adressage (210) pour initialiser la programmation des orientations de diffusion, le chemin de parcours déterminé comprenant de quatre à huit orientations distinctes.

19. Système selon l'une quelconque des revendications 14 à 18, dans lequel les moyens de diffusion d'erreur (23) sont conçus pour fournir des données de diffusion d'erreur représentatives de coefficients d'erreur à diffuser définis en fonction de données (31) de commande de la table de décisions (3), les moyens de diffusion d'erreur (23) étant reliés à des moyens de sortie de pixel (24) pour que le pixel de sortie produit soit envoyé dans des moyens de stockage de sortie (4) stockant les pixels de sortie pour affichage ou impression.

20. Système selon l'une quelconque des revendications 16 à 19, dans lequel les moyens de diffusion d'erreur (23) comprennent des premiers moyens de multiplexage (14) pour diffuser l'erreur sur le pixel courant en fonction d'informations définies dans lesdites commandes de moyens de multiplexage et relatives à des conditions de multiplexage de l'erreur à reporter sur le pixel courant.

21. Système selon la revendication 20, dans lequel les moyens de répartition d'erreur comprennent des seconds moyens de multiplexage (12), formant la première et la deuxième unité de répartition d'erreur, pour ajouter lesdites données de diffusion d'erreur en fonction d'informations définies dans lesdites commandes de moyens de multiplexage et relatives à des conditions de multiplexage de données représentatives d'une trace de mémoire de stockage du pixel courant.

22. Système selon la revendication 21, dans lequel le circuit de traitement (2) comporte un module de calcul (230) conçu pour produire les données de diffusion d'erreur, ledit module de calcul (230) disposant d'au moins une première liaison de sortie vers les seconds moyens de multiplexage (12) ainsi que d'une liaison supplémentaire vers une unité de stockage temporaire, formant tampon (200) et stockant temporairement des données de diffusion d'erreur, lesdits seconds moyens de multiplexage (12) étant aptes à utiliser les informations sur les conditions de multiplexage de la trace de mémoire de stockage du pixel courant, de façon à envoyer les données de diffusion d'erreur produites par le module de calcul (230) dans une mémoire interne (m1, m2, m3) s'il s'agit d'erreur à diffuser dans le même bloc (B) ou sinon dans une mémoire externe au circuit de traitement (2).

23. Système selon l'une quelconque des revendications 14 à 22, dans lequel les moyens de stockage d'entrée (10) sont agencés pour diviser les données d'entrée en une pluralité de blocs de pixels (B) de hauteur (H) uniforme dimensionnés pour former des rangées de blocs (B) de façon à permettre un balayage horizontal des blocs de pixels (B) par l'unité de sélection (20).

24. Système selon l'une quelconque des revendications 14 à 22, dans lequel les moyens de stockage d'entrée (10) sont agencés pour diviser les données d'entrée en une pluralité de blocs de pixels (B) de largeur uniforme dimensionnés pour former des colonnes de blocs (B) de façon à permettre un balayage vertical des blocs de pixels (B) par l'unité de sélection (20).
